# EUROPÄISCHE PATENTSCHRIFT

(11) **EP 0 388 688 B1**
(45) Veröffentlichungstag und Bekanntmachung des Hinweises auf die Patenterteilung: **29.12.1993**
(21) Anmeldenummer: 90104095.6
(22) Anmeldetag: 02.03.1990
(51) Int. Cl.: B23B 27/04

(54) **Spanendes Werkzeug mit Schneideinsatz**
Cutting tool with a cutting insert
Outil d'usinage avec plaquette de coupe

(30) Priorität: 22.03.1989 DE 3909358
(43) Veröffentlichungstag der Anmeldung: 26.09.1990
(73) Patentinhaber: ZINNER GmbH PRÄZISIONSWERKZEUGE, D-90431 Nürnberg (DE)
(72) Erfinder: Zinner, Karl, 8500 Nürnberg 80 (DE)
(74) Vertreter: Matschkur, Götz, Lindner Patent- und Rechtsanwälte

(56) Entgegenhaltungen:
- EP-A- 59 602
- EP-A- 259 847
- EP-A- 0 242 343
- DE-A- 2 259 216
- DE-A- 3 219 150
- DE-A- 3 319 799
- DE-A- 3 434 089
- DE-A- 3 810 032
- JP-U- 5 611 007
- US-A- 3 894 322

## Beschreibung

Die Erfindung betrifft ein spanendes Werkzeug mit in einem einteiligen Werkzeugträger auswechselbar gehaltertem Stech- oder Schneideinsatz, der an einander gegenüberliegenden, einen Klemmspalt bildenden Backen des Werkzeugträgers längs gemeinsamer, prismenartig angeordneter Klemmflächen anliegt, und mit wenigstens einem Spannelement zur Verengung des Klemmspalts. Ferner betrifft die Erfindung ein Verfahren zur Verwendung eines Werkzeug-, insbesondere Stech- oder Schneideinsatzes, im Werkzeughalter eines solchen Werkzeuges, wobei der Werkzeugeinsatz mit an entgegengesetzten Seiten prismenartig angeordneten Klemmflächen zur Anlage an gegenüberliegende, einen Klemmspalt bildende Backen des Werkzeughalters versehen ist, und auf wenigstens seiner einen Seite voneinander separate Flächenabschnitte in Längsrichtung hintereinander in unterschiedlichen Ebenen liegend ausgebildet sind, die zusammen einen stumpfwinkligen Keil begrenzen, der sich zur entgegengesetzten Seite verbreitert.

Zur Erzielung einer hohen Querstabilität ist es bei Stechdreh-Werkzeugen mit wechselbaren Schneideinsätzen bekannt (Offenlegungsschrift DE 34 34 089), neben dem Schneideinsatz und dem Werkzeugträger noch ein weiteres, separates Element, nämlich ein Spannblatt, vorzusehen. Dieses ist im Werkzeugträger längsverschieblich geführt und wird beim Anziehen einer Spannschraube nach vorne zur Klemmung des Schneideinsatzes gegen den Werkzeugträger gedrückt. Zur Realisierung dieser Längsverschiebung ist allerdings im Werkzeugträger eine verhältnismäßig aufwendige, präzise Linearführung für das Spannblatt auszubilden. Zudem muß der Schneideinsatz stets zur Stech- bzw. Führungsrichtung geneigt angeordnet sein.

Bei einer bekannten, klemmenden Befestigungsvorrichtung (DE-A 33 19 799) wird ein Schneideinsatz verwendet, der an seinen einander gegenüberliegenden Flanken oder Schmalseiten keilförmige Nuten aufweist. In diese sind zum Eingriff komplementär ausgebildete, dachartig abgeschrägte Vorsprünge eines Schneidenträgers vorgesehen. Gleichzeitig weist der bekannte Schneideinsatz auch an seiner rückwärtigen Flanke oder Schmalseite eine keilförmige Nut auf, in welche wiederum zum Eingriff ein dachartig abgeschrägter Vorsprung am hinteren Rand der Aufnahmeausnehmung des Schneidenträgers vorgesehen ist. Allerdings liegt der Vorsprung des Schneidenträgers in Schneid- bzw. Abstechrichtung nichtklemmend an, so daß eine unverrückbare Halterung des Schneideinsatzes nur in seitlicher Richtung erreicht wird.

Bei bekannten Werkzeugen der eingangs genannten Art (vgl. Patentschrift DE 32 19 150) ist die Klemmfläche wenigstens eines Klemmbackens mit einer zur Ausbildung der anliegenden Klemmfläche des Schneideinsatzes korrespondierenden, vorzugsweise querschnittlich dreieckigen Einmuldung bzw. Wölbung versehen. Durch doppelprismatische Ausbildung des Halterungsabschnittes und umgekehrt durch einander gegenüberliegende Dreiecksnuten in den Klemmflächen des Schneideinsatzes ergibt sich eine besonders gute Halterung und Absicherung gegenüber Querbeanspruchungen. Darüber hinaus ist eine zusätzliche Klemmschraube vorgesehen, welche über das elastische Federungsmaß bei der Aufspreizung hinausgehend den aufspreizbaren Klemmbacken gegen den Schneideinsatz preßt. Zwar steigt die Klemmfläche des aufspreizbaren Klemmbackens in der Einsatzstellung gegenüber der Klemmfläche des Schneideinsatzes nach dem Klemmspaltinneren hin allmählich an, so daß der eigentliche Klemmpunkt in erheblichem Abstand vom hinteren Ende des Schneideinsatzes liegt. Allerdings erzeugt die genannte Klemm- bzw. Spannschraube aufgrund der Ausbildung der prismatischen Klemmflächen lediglich Kraftkomponenten etwa senkrecht zur Längsrichtung des Klemmspaltes. Ein Zusammenwirken der Spannkraft der Spann- bzw. Klemmschraube mit dem nach vorne verlagerten, eigentlichen Klemmpunkt wird hierbei nicht bewirkt.

Sonach wird das der Erfindung zugrundeliegende Problem aufgeworfen, bei einem Werkzeug der eingangs genannten Art unter Vermeidung der genannten Nachteile eine nach allen Seiten hin sichere und zuverlässige Schneideinsatzklemmung zu gewährleisten, insbesondere eine allseitig spannzangenartige Umfassung des Schneideinsatzes im Klemmsitz zu schaffen, ohne die Anzahl der Konstruktions- und Funktionselemente sowie den Herstellungs- und Bedienungsaufwand zu erhöhen. Zur Lösung wird erfindungsgemäß vorgeschlagen, daß die Klemmflächen mindestens eines Backens in zwei in Spaltlängs- und/oder -öffnungsrichtung hintereinander angeordnete Abschnitte unterteilt sind und daß von diesen beiden Klemmflächenabschnitten der in Spaltöffnungsrichtung nach dem Spannelement und vor dem benachbarten Klemmflächenabschnitt angeordnete Klemmflächenabschnitt bezüglich der Richtung der von dem betätigten Spannelement ausgelösten Spannkraft derart schräg verläuft, daß eine zum offenen Stirnende des Klemmspaltes gerichtete Kraftkomponente am Schneideinsatz angreift, wobei die gegenüberliegenden Anlageflächen des anderen benachbarten Klemmf lächenabschnitts mit zunehmender Entfernung vom offenen Stirnende des Klemmspaltes divergieren.

Durch die zur stirnseitigen Klemmspaltöffnung gerichtete Kraftkomponente wird der Schneideinsatz gegen in Öffnungsnähe angebrachte Widerhalte, z.B. gegen einen etwaigen nach vorne verlagerten Klemmpunkt, gedrückt, so daß die Sicherheit gegenüber allseitig angreifenden Schnittkräften weiter erhöht ist. Durch die Ausbildung eines schräg verlaufenden Klemmflächenabschnittes wird eine schiefe Ebene bzw. Rampe geschaffen, auf welcher die Spannkraft der Spannschraube auftreffen und sich in Komponenten senkrecht und parallel zur Längsrichtung des Klemmspaltes aufteilen kann. Ein vom Werkzeugträger gesondertes, linear geführtes Spannelement, wie beim Stand der Technik, kann entfallen; vielmehr wird nach dem Erfindungsgedanken das den Klemmspalt verengende Verschwenken eines Backens im Zusammenwirken mit der schiefen Ebene am Schneideinsatz überraschend einfach zur Erzeugung der gewünschten Kraftkomponente ausgenutzt. Der Erfindungsgedanke ist anwendbar auf Schneideinsätze, deren an die Klemmbacken anliegende Oberflächen prismatisch derart angeordnet sind, daß sie sowohl konvex vorstehen ("positives Prisma") als auch konkav nach innen geneigt sind, z.B. eine V-Nut bilden ("negatives Prisma").

Zur Realisierung der Erfindung ist es zweckmäßig, daß der erfindungsspezifisch ausgebildete Klemmflächenabschnitt gegenüber der Längsachse der Spannschraube im spitzen Winkel verläuft. Erstreckt sich die Spannschraube etwa quer zur Längsrichtung des Klemmspaltes, ergibt sich zwangsläufig ein stumpfer Winkel zwischen dem erfindungspezifisch schräg verlaufenden Klemmflächenabschnit und der Längsrichtung des Klemmspaltes.

Nach der Erfindung sind die Klemmflächen mindestens eines Backens in wenigstens zwei in Spaltlängsrichtung hineinander angeordnete Abschnitte unterteilt, von denen einer schräg zur Richtung der Spannkraft verläuft und bei Betätigung der Spannschraube die Kraftkomponente in Klemmspalt-Öffnungsrichtung erzeugt. Zugleich ist in Spaltöffnungsrichtung der schräg verlaufende Klemmflächenabschnitt nach der Spannschraube und vor dem benachbarten Klemmflächenabschnitt angeordnet, wobei die gegenüberliegenden Anlageflächen dieses benachbarten Klemmflächenabschnitts mit zunehmender Entfernung vom offenen Stirnende des Klemmspaltes divergieren. Hierdurch wird die eingangs genannte, angestrebte Wirkungsverbindung mit dem durch nach innen ansteigende Klemmflächen ausgebildeten, vorgelagerten Klemmpunkt erzielt. Beim Anziehen der Spannschraube drückt die daraus resultierende Spannkraft auf den schräg verlaufenden Klemmflächenabschnitt wobei die Kraftkomponente in Richtung der Öffnung des Klemmspaltes entsteht. Diese Kraftkomponente drückt den Schneideinsatz etwas in Richtung zur Klemmspaltöffnung und damit auf den vorgelagerten Klemmpunkt. Hierdurch wird eine allseitig feste und vor allem auch gegen Seitenkräfte gesicherte Klemmung des Schneideinsatzes erreicht. Dies wird nach dem erfindungsgemäßen Konzept in einfacher Weise, im wesentlichen ohne zusätzliche bauliche Mittel, wie z.B. indirekt durch Führungen betätigte Spannblätter, erzielt. Insbesondere kann nach einer weiteren Ausbildung der Erfindung der Backen mit dem gegenüber der Spannkraft schräg verlaufenden Klemmabschnitt als von der Spannschraube direkt verstellbare Spannpratze ausgebildet sein.

Zur Ausprägung und Realisierung der gegenüber der Spannkraft schrägverlaufenden Klemmfläche zwischen dem Backen des Werkzeugträgers und dem gesondert ausgebildeten Klemmf lächenabschnitt des Werkzeugeinsatzes ist zweckmäßig ein Vorsprung vorgesehen, der vom Klemmbacken in den Klemmspalt ragt und dabei gegen den Werkzeugeinsatz bzw. dessen Klemmflächenabschnitt drückt. Um diese Druckkraft auf einen bestimmten Angriffspunkt am Werkzeugeinsatz bzw. auf eine gewünschte Richtung konzentrieren bzw. ausrichten zu können, sind die die Druckkraft übertragenden Klemmflächen mit in Längsrichtung des Klemmspalts konkav und/oder konvex gebogenem Verlauf geformt; solche Einbuchtungen bzw. Ausbauchungen verhindern ein Verrutschen der Angriffspunkte in der Längsrichtung.

Im erfindungsgemäßen Werkzeugsystem sind spanende Werkzeugeinsätze, insbesondere Stech- oder Schneideinsätze anwendbar, die an entgegengesetzten Seiten prismenartig angeordnete Klemmflächen zur Anlage an gegenüberliegende, einen Klemmspalt bildende Backen eines Werkzeughalters aufweisen. Eine dieser erfindungsgemäßen Verwendung dienende Ausbildung eines derartigen Werkzeugeinsatzes besteht darin, daß auf wenigstens einer Seite voneinander separate Klemmflächenabschnitte in Längsrichtung hintereinander in unterschiedlichen Ebenen liegend ausgebildet sind, die zusammen einen stumpfwinkligen Keil begrenzen, der sich zur entgegengesetzten Seite hin verbreitert.

Der Scheitel des Keilwinkels steht dabei zur zugewandten Backe des Klemmspaltes vor, welcher komplementär ausgebildete, vorzugsweise prismatische Anlage- bzw. Klemmflächen aufweist. Mit den zweckmäßig in Längsrichtung des Schneideinsatzes sich erstreckenden Keilschenkeln werden schiefe Ebenen bzw. schräg verlaufende Rampen geschaffen, auf die Spann- bzw. Klemmkräfte angreifen und sich dabei in Kraftkomponenten aufspalten können, die eine umfassende Spannzangenwirkung für den Schneideinsatz herbeiführen.

Der Vereinfachung der Herstellbarkeit dient es, wenn in Weiterbildung des erfindungsgemäßen Werkzeugeinsatzes einer der im stumpfen Keilwinkel angeordneten Klemmflächenabschnitte parallel zu den Klemmflächen der entgegengesetzten Seite verläuft. Hierdurch läßt sich auch der Werkzeugeinsatz leicht in den Klemmspalt einführen, da die an gegenüberliegenden Backen ausgebildeten, prismatischen Klemmflächen dann auch parallel verlaufen und für den Werkzeugeinsatz eine Führung beim Einsetzen in den Klemmspalt bilden.

Schließlich besteht eine besonders vorteilhafte Ausbildung des Werkzeugeinsatzes nach der Erfindung darin, daß auf einer Seite drei separate Klemmflächenabschnitte ausgebildet sind, von denen der mittlere parallel zu den Klemmflächen auf der entgegengesetzten Seite verläuft und die beiden äußeren gegenüber dem mittleren stumpfwinklig und zueinander spiegelgleich abgeschrägt sind. Diese Ausbildung eignet sich vor allem für Schneideinsätze mit an entgegengesetzten Enden angebrachten Schneidkeilen. Ist die Schneidenfläche eines Schneidkeils stumpf, kann der Schneideinsatz aus dem Klemmspalt herausgezogen und umgekehrt wieder eingesetzt werden, so daß die noch nicht gebrauchte Schneidenkante nach außen absteht.

Weitere Merkmale, Einzelheiten und Vorteile ergeben sich aus der nachfolgenden Beschreibung bevorzugter Ausführungsbeispiele der Erfindung sowie anhand der Zeichnung. Darin zeigen:
- Fig. 1: eine Seitenansicht auf einen Werkzeugeinsatz gemäß Erfindung,
- Fig. 2: eine Draufsicht etwa gemäß dem Pfeil II in Figur 1,
- Fig. 3: eine teilweise aufgeschnittene Seitenansicht auf einen Teil des Werkzeughalters mit eingeklemmtem Werkzeugeinsatz,
- Fig. 4 bis 6 sowie 7 bis 9: zwei Abwandlungen der Erfindung in jeweils Fig. 1 - 3 entsprechenden Ansichten.

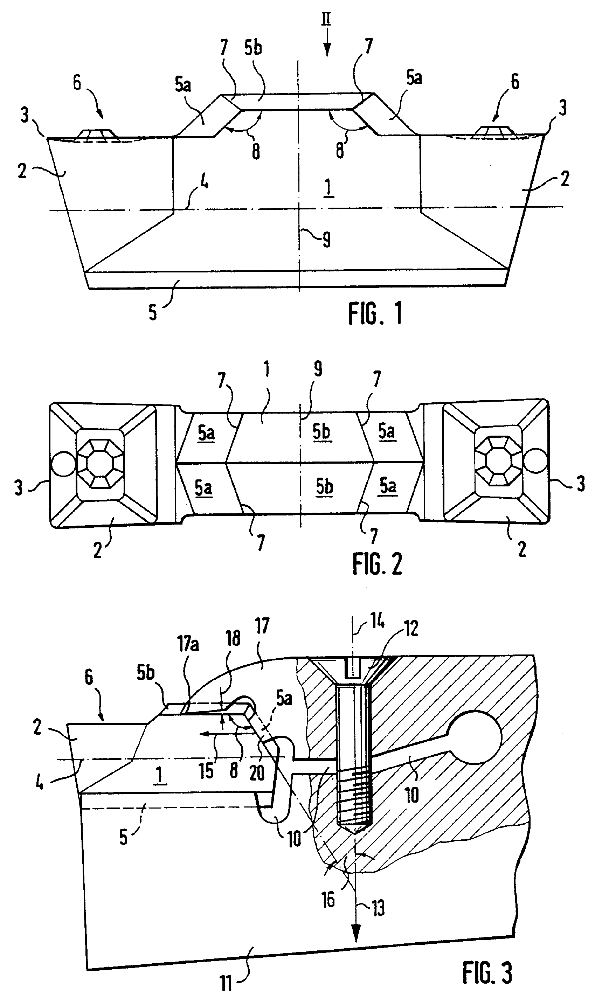

Der in Figur 1 und 2 dargestellte Werkzeugeinsatz ist als Doppel-Schneideinsatz realisiert, dessen Halterungsschaft 1 an seinen entgegengesetzten Enden je einen Schneidkeil 2 mit Schneidenkanten 3 aufweist. An bezüglich der Längsachse 4 entgegengesetzt angeordneten Seiten sind jeweils konvex-prismatisch angeordnete Anlageflächen 5 für den Eingriff mit komplementär ausgebildeten, konkav-prismatischen Anlageflächen von gegenüberliegenden Klemmbacken (vgl. Figur 3) geformt. Die gemäß Darstellung obere Seite des Halterungsschaftes 1 besitzt drei in Längsrichtung 4 hintereinander angeordnete Klemmflächenabschnitte, nämlich die beiden äußeren, den Spanflächen 6 unmittelbar benachbarten Klemmflächenabschnitte 5a und den zwischen diesen angeordneten, mittleren Klemmflächenabschnitt 5b. Die Ebenen des mittleren Klemmflächenabschnitts 5b schließen an den jeweiligen Grenzkanten 7 zu den äußeren Klemmflächenabschnitten 5a mit deren Ebenen jeweils im gezeichneten Beispiel denselben stumpfen Winkel 8 ein. Die mittlere Querschnittsachse 9 des Halterungsschaftes 1 bzw. Werkzeugeinsatzes bildet eine Symmetrieachse, bezüglich welcher die beiden äußeren Klemmflächenabschnitte 5a spiegelgleich angeordnet sind. Der mittlere Klemmflächenabschnitt 5b an der Oberseite des Halterungsschaftes 1 verläuft zu der Klemmfläche 5 an dessen Unterseite parallel. Die beiden äußeren Klemmflächenabschnitte 5a sind - ebenso wie die beiden Schneidkeile 2 - zueinander redundant angeordnet und ermöglichen eine zweimalige Verwendung des Werkzeugeinsatzes.

Die Wirkungsweise der erfindungsgemäßen Einklemmgeometrie ist in Figur 3 verdeutlicht, nach welcher ein Werkzeugeinsatz mit lediglich einem Schneidkeil 2 in einen Klemmspalt 10 eines Werkzeughalters 11 eingespannt ist. Dieser sowie der Klemmspalt 10 sind von einer Spannschraube 12 durchsetzt, welche bei entsprechender Verdrehung eine Spannkraft 13 in ihrer Längsrichtung 14 erzeugt. Diese führt eine Verengung des Klemmspaltes 10 und damit einhergehend eine Klemmung des Halterungsschaftes 1 des Werkzeugeinsatzes herbei.

Entsprechend Figur 1 und 2 besitzt der Halterungsschaft 1 oberhalb seiner Längsachse 4 zwei hintereinander angeordnete, jeweils prismatische Anlageflächenabschnitte 5a, 5b, nämlich den hinteren, dem Inneren des Werkzeughalters 11 zugewandten Anlageflächenabschnitt 5a und den vorderen Anlageflächenabschnitt 5b. Letzterer verläuft etwa parallel zu der unterhalb der Längsachse 4 befindlichen Klemmfläche 5. Da in Richtung der Längsachse 4 die beiden oberen Anlageflächenabschnitte 5a, 5b im stumpfen Keilwinkel 8 zueinander liegen, wirkt sich die Spannkraft 13 in eine zum stirnseitigen Ausgang des Klemmspaltes 10 bzw. parallel zur Längsachse 4 des Werkzeugeinsatzes gerichtete Kraftkomponente 15 aus. Diese Wirkung wird vor allem durch die Anlagefläche 5a, die gegenüber der Spannkraft 13 im spitzen Winkel 16 verläuft, herbeigeführt; sie hat gleichsam die Funktion einer schiefen Ebene bzw. schrägen Rampe, mittels welcher die Spannkraft 13 in verschiedene Kraftkomponenten, einschließlich der zur Klemmspaltöffnung gerichteten Kraftkomponente 10, aufgespalten wird. Die beiden oberen Anlageflächenabschnitte 5a, 5b bilden also je einen Schenkel eines Keiles, wobei der durch den inneren Keil bzw. Anlageflächenabschnitt 5a gebildete Schenkel bei Anziehen der Spannschraube 12 den Klemmschaft 1 nach vorne zur stirnseitigen Öffnung des Klemmspaltes 10 hin drückt und so die Gesamtklemmung des Schneideinsatzes verstärkt.

Während der innere, hintere Anlageflächenabschnitt 5a des Werkzeugansatzes an den gegenüberliegenden, aufspreizbaren Backen 17 des Werkzeughalters 11 im Beispiel über einen Backenvorsprung 20 anliegt und so mit diesem eine durchgehende gemeinsame Klemmfläche bildet, ist die mit dem vorderen Anlageflächenabschnitt 5b gemeinsame Klemmfläche auf einen vorgelagerten Klemmpunkt 17a reduziert, der durch ein Auseinanderlaufen bzw. eine Divergenz 18 zwischen den gegenüberliegenden Anlageflächen des aufspeizbaren Backens 17 und des Halterungsschaftes 1 entsteht. Hierdurch wird beim Anziehen der Spannschraube 12 ein Herausdrücken des Schneideinsatzes aus dem Klemmspalt 10 mit Sicherheit vermieden.

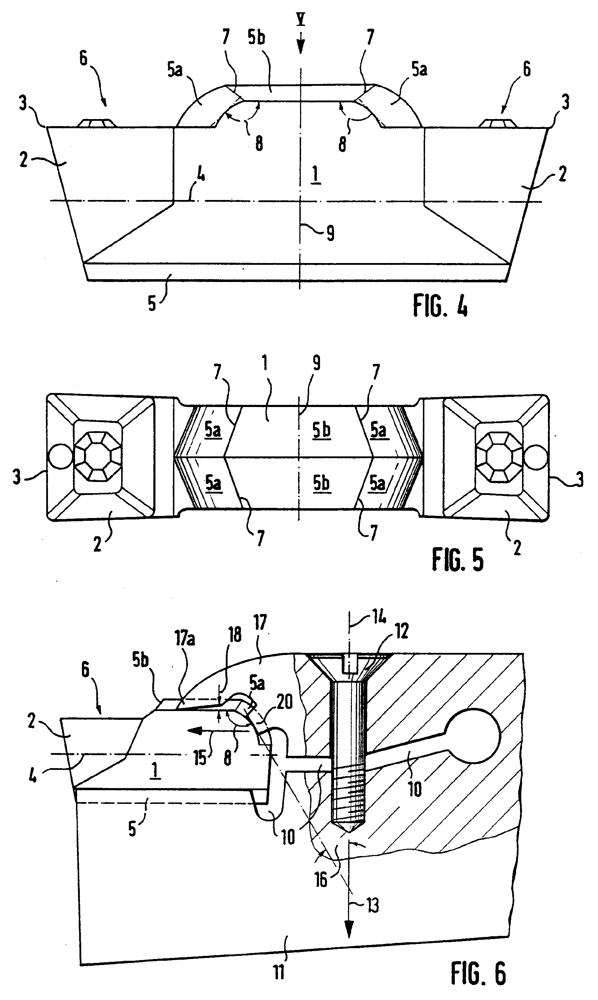

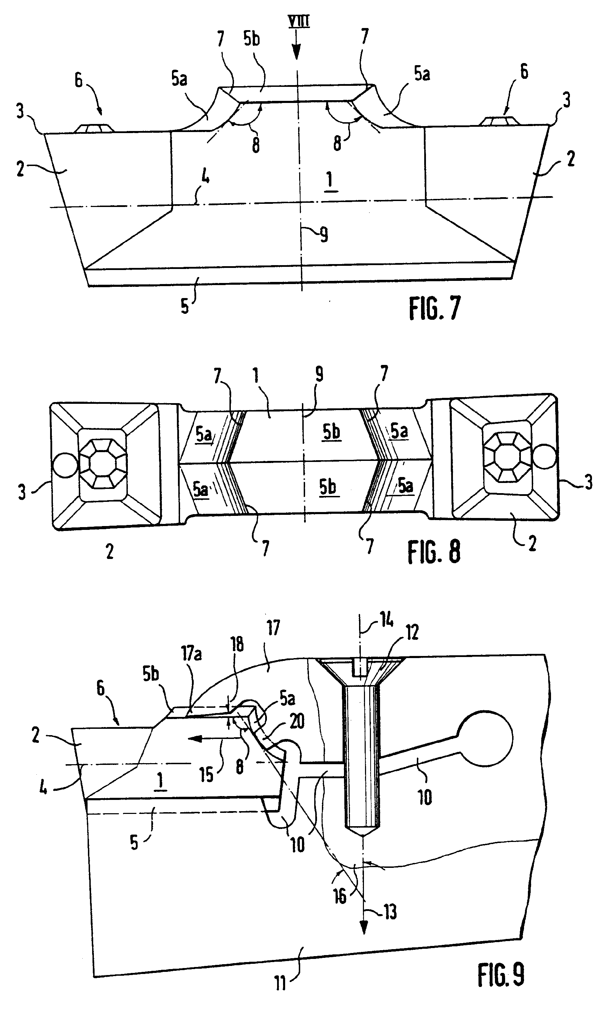

Die beiden weiteren Erfindungsvarianten gemäß Fig. 4 bis 6 und 7 bis 9 unterscheiden sich von dem ersten Ausgestaltung durch die besondere Ausgestaltung der jeweiligen separaten, schrägen Klemmflächenabschnitte 5b zwischen Werkzeugeinsatz und Backenvorsprung 20: Nach Fig. 4 bis 6 sind die hierfür notwendigen Anlageflächen am Werzeugeinsatz in dessen Längsrichtung 4 konvex gerundet, und die daran anliegende Oberfläche des Backenvorsprungs 20 komplementär konkav gerundet geformt. Umgekehrt sind nach Fig. 7 bis 9 die entsprechenden Anlageflächen des Werkzeugeinsatzes konkav ausbauchend und die zur Anlage daran vorgesehen Oberflächen des Backenvorsprungs konvex ausgebuchtet bzw. ausgebogen ausgeführt.

## Patentansprüche

1. Spanendes Werkzeug mit in einem einteiligen Werkzeughalter auswechselbar gehaltertem Stech- oder Schneideinsatz, der an gegenüberliegenden, einen Klemmspalt (10) bildenden Backen (17) eines Werkzeughalters (11) längs gemeinsamer prismenartig angeordneter Klemmflächen (5, 5a, 5b) anliegt, und mit wenigstens einem Spannelement (12) zur Verengung des Klemmspalts (10), dadurch gekennzeichnet, daß die Klemmflächen mindestens eines Backens (17) in zwei in Spaltlängs- und/oder -öffnungsrichtung (4) hintereinander angeordnete Abschnitte (5a, 5b) unterteilt sind, und daß von diesen beiden Klemmflächenabschnitten (5a, 5b) der in Spaltöffnungsrichtung (4) nach dem Spannelement (12) und vor dem benachbarten Klemmflächenabschnitt (5b) angeordnete Klemmflächenabschnitt (5a) bezüglich der Richtung (14) der von dem betätigten Spannelement (12) ausgelösten Spannkraft (13) derart schräg verläuft, daß eine zum offenen Stirnende des Klemmspaltes (10) gerichtete Kraftkomponente (15) am Schneideinsatz angreift, wobei die gegenüberliegenden Anlageflächen des anderen benachbarten Klemmflächenabschnitts (5b) mit zunehmender Entfernung vom offenen Stirnende des Klemmspaltes (10) divergieren (18).

2. Werkzeug nach Anspruch 1, dadurch gekennzeichnet, daß der Klemmflächenabschnitt (5a) gegenüber der Spannkraft (13) des Spannelements (12) im spitzen Winkel (16) verläuft.

3. Werkzeug nach Anspruch 1 oder 2, dadurch gekennzeichnet, daß der Backen (17) mit dem gegenüber der Spannkraft (13) schräg verlaufenden Klemmflächenabschnitt (5a) als von dem Spannelement (12) verstellbare Spannpratze ausgebildet ist.

4. Werkzeug nach einem der vorhergehenden Ansprüche, gekennzeichnet durch einen vom Backen (17) in den Klemmspalt (10) ragenden Vorsprung (20) zur Anlage an dem gesondert bzw. separat ausgebildeten Klemmflächenabschnitt (5a).

5. Werkzeug nach einem der vorhergehenden Ansprüche, gekennzeichnet durch in Richtung der Klemmspalt-Längsachse (4) konkav und/oder konvex gewölbt verlaufende Klemmflächen (5, 5a, 5b).

6. Verfahren zur Verwendung eines spanenden Werkzeugeinsatzes, insbesondere Stech- oder Schneideinsatzes, im Werkzeughalter (11) eines Werkzeugs nach einem der vorhergehenden Ansprüche, wobei der Werkzeugeinsatz mit an entgegengesetzten Seiten prismenartig angeordneten Klemmflächen (5a, 5b) zur Anlage an gegenüberliegende, einen Klemmspalt (10) bildende Backen (17) des Werkzeughalters (11) versehen ist, und auf wenigstens seiner einen Seite voneinander separate Flächenabschnitte (5a, 5b) in Längsrichtung (4) hintereinander in unterschiedlichen Ebenen liegend ausgebildet sind, die zusammen einen stumpfwinkligen Keil (8) begrenzen, der sich zur entgegengesetzten Seite verbreitert, dadurch kennzeichnet, daß die im stumpfen Keilwinkel (8) angeordneten Flächenabschnitte (5a, 5b) beide gleichzeitig als Klemmflächenabschnitte zur Anlage an einen Klemmbacken (17) des Werkzeughalters (11) verwendet werden.

7. Verfahren nach Anspruch 6, dadurch gekennzeichnet, daß ein Werkzeugeinsatz verwendet wird, bei dem einer (5b) der im stumpfen Keilwinkel (8) angeordneten Klemmflächenabschnitte (5a, 5b) parallel zu den Klemmflächen (5) der entgegengesetzten Seite verläuft.

8. Verfahren nach Anspruch 6 oder 7, dadurch gekennzeichnet, daß ein Werkzeugeinsatz verwendet wird, bei dem auf einer Seite drei separate Klemmflächenabschnitte (5a, 5b) ausgebildet sind, von denen der mittlere (5b) parallel zu den Klemmflächen (5) auf der entgegengesetzten Seite verläuft, und die beiden äußeren (5a) gegenüber dem mittleren stumpfwinklig (8) und zueinander spiegelgleich (9) abgeschrägt sind (Fig. 1, 2).

9. Verfahren nach Anspruch 6, 7 oder 8, dadurch gekennzeichnet, daß ein Werkzeugeinsatz verwendet wird, bei dem ein oder mehrere Klemmflächenabschnitte (5, 5a, 5b) in Längsrichtung (4) konkav und/oder konvex gewölbt verlaufend ausgebildet sind.

## Claims

1. Cutting tool with a piercing or cutting insert held in an exchangeable manner in a one-part tool holder and bearing on opposing jaws (17) of a tool holder (11) forming a clamping gap (10) along common, prismatically arranged clamping faces (5, 5a, 5b), and having at least one clamping element (12) for narrowing the clamping gap (10), characterised in that the clamping faces of at least one jaw (17) are divided into two sections (5a, 5b) arranged consecutively in the longitudinal and/or opening direction (4) of the gap, and in that of these two clamping face sections (5a, 5b), the clamping face section (5a) disposed after the clamping element (12) and in front of the adjacent clamping face section (5b) in the direction of opening of the gap (4) runs obliquely relative to the direction (14) of the clamping force (13) exerted by the actuated clamping element (12), in such a manner that a force component (15) oriented towards the open end of the clamping gap (10) acts on the cutting insert, in which case the opposing contact faces of the other adjacent clamping face section (5b) diverge (18) with increasing distance from the open end of the clamping gap (10).

2. Tool according to claim 1, characterised in that the clamping face section (5a) extends at an acute angle (16) relative to the clamping force (13) of the clamping element (12).

3. Tool according to claim 1 or 2, characterised in that the jaw (17) with the clamping face section (5a) extending obliquely relative to the clamping force (13) is formed as a clamping claw adjustable by the clamping element (12).

4. Tool according to one of the preceding claims, characterised by a projection (20) protruding from the jaw (17) into the clamping gap (10) so as to bear on the separately formed clamping face section (5a).

5. Tool according to one of the preceding claims, characterised by clamping faces (5, 5a, 5b) extending in a concave and/or convex manner in the direction of the clamping gap longitudinal axis (4).

6. Method of using a cutting tool insert, in particular piercing or cutting insert, in the tool holder (11) of a tool according to one of the preceding claims, wherein the tool insert is provided with clamping faces (5a, 5b) arranged prismatically on opposite sides for bearing on opposing jaws (17) of the tool holder (11) forming a clamping gap (10), and flat sections (5a, 5b) separate from one another are formed on at least one side of said tool holder so as to lie behind one another in different planes in the longitudinal direction (4), which planes together define an obtuse-angled wedge (8) which widens towards the opposite side, characterised in that the flat sections (5a, 5b) arranged at an obtuse wedge angle (8) are both used simultaneously as clamping face sections for bearing on a clamping jaw (17) of the tool holder (11).

7. Method according to claim 6, characterised in that a tool insert is used in which one (5b) of the clamping face sections (5a, 5b) arranged at an obtuse wedge angle (8) runs parallel to the clamping faces (5) of the opposite side.

8. Method according to claim 6 or 7, characterised in that a tool insert is used in which, on one side, three separate clamping face sections (5a, 5b) are formed, of which the middle one (5b) runs parallel to the clamping faces (5) on the opposite side, and the two outer sections (5a) are chamfered into an obtuse angle (8) relative to the middle section and with mirror symmetry (9) to one another (Figures 1, 2).

9. Method according to claim 6 or 7 or 8, characterised in that a tool insert is used in which one or more clamping face sections (5, 5a, 5b) are formed so as to extend concavely and/or convexly in the longitudinal direction (4).

## Revendications

1. Outil d'usinage par enlèvement de copeaux, comportant un insert de coupe ou de saignée, qui est maintenu de manière interchangeable dans un porte-outil d'une seule pièce, et qui s'appuie sur des mors (17) opposés d'un porte-outil (11), formant une fente de serrage (10), le long de surfaces de serrage (5, 5a, 5b) communes, agencées de manière prismatique, l'ensemble comportant également au moins un élément de serrage (12) pour resserrer la fente de serrage (10), caractérisé en ce que les surfaces de serrage d'au moins un mors (17) sont divisées en deux tronçons (5a, 5b) disposés l'un à la suite de l'autre dans la direction longitudinale de la fente et/ou dans la direction de l'ouverture (4) de la fente, et en ce que de ces deux tronçons de surface de serrage (5a, 5b), le tronçon de surface serrage (5a) disposé après l'élément de serrage (12) et avant le tronçon de surface de serrage (5b) voisin, s'étend de manière oblique par rapport à la direction (14) de la force de serrage (13) produite par l'élément de serrage (12), de manière telle qu'une composante de force (15) dirigée vers l'extrémité frontale ouverte de la fente de serrage (10), agit sur l'insert de coupe, les surfaces d'appui opposées de l'autre tronçon de surface de serrage (5b) voisin, divergeant (18) avec leur éloignement croissant de l'extrémité frontale ouverte de la fente de serrage (10).

2. Outil selon la revendication 1, caractérisé en ce que le tronçon de surface de serrage (5a) s'étend de manière à former un angle aigu (16) avec la force de serrage (13) de l'élément de serrage (12).

3. Outil selon la revendication 1 ou 2, caractérisé en ce que le mors (17) comportant le tronçon de surface de serrage (5a) s'étendant obliquement par rapport à la force de serrage (13), est réalisé en tant que griffe de serrage pouvant être déplacée par l'élément de serrage (12).

4. Outil selon l'une des revendications précédentes, caractérisé par une protubérance (20) faisant saillie du mors (17) dans la fente de serrage (10), et destinée à venir en appui sur le tronçon de surface de serrage (5a) réalisé de manière distincte ou séparée.

5. Outil selon l'une des revendications précédentes, caractérisé par des surfaces de serrage (5, 5a, 5b) s'étendant avec une courbure concave et/ou convexe dans la direction de l'axe longitudinal (4) de la fente de serrage.

6. Procédé d'utilisation d'un insert d'outil de coupe par enlèvement de copeaux, notamment un insert de coupe ou de saignée, dans le porte-outil (11) d'un outil selon l'une des revendications précédentes, l'insert d'outil comportant sur des côtés opposés, des surfaces de serrage (5a, 5b) disposées à la manière d'un prisme et destinées à venir en appui sur des mors (17) opposés du porte-outil (11) formant une fente de serrage (10), et des tronçons de surface (5a, 5b) séparés l'un de l'autre étant réalisés sur au moins un de ses côtés en étant disposés l'un à la suite de l'autre dans la direction longitudinale (4) et dans des plans différents, ces tronçon de surface délimitant ensemble un coin à angle obtus (8) qui s'élargit du côté opposé, caractérisé en ce que les tronçons de surface (5a, 5b) disposés en formant un coin à angle obtus (8), sont utilisés tous les deux simultanément en tant que tronçons de surface de serrage pour l'appui sur un mors de serrage (17) du porte-outil (11).

7. Procédé selon la revendication 6, caractérisé en ce que l'on utilise un insert d'outil sur lequel l'un (5b) des tronçons de surface de serrage (5a, 5b) disposés en coin à angle obtus (8), s'étend parallèlement aux surfaces de serrage (5) du côté opposé.

8. Procédé selon la revendication 6 ou 7, caractérisé en ce que l'on utilise un insert d'outil sur lequel sont réalisés sur un côté, trois tronçons de surface de serrage séparés (5a, 5b), dont le tronçon central (5b) s'étend parallèlement aux surfaces de serrage (5) sur le côté opposé, et les deux tronçons extérieurs (5a) s'étendent de manière oblique par rapport au tronçon central en formant avec lui un angle obtus (8), et symétriquement l'un par rapport à l'autre.

9. Procédé selon la revendication 6, 7 ou 8, caractérisé en ce que l'on utilise un insert d'outil sur lequel un ou plusieurs tronçons de surface de serrage (5, 5a, 5b) son réalisés de manière à s'étendre avec une courbure concave et/ou convexe dans la direction longitudinale (4).
